# EUROPÄISCHE PATENTANMELDUNG

(11) **EP 0 911 815 A1**
(43) Veröffentlichungstag der Anmeldung: **28.04.1999**
(21) Anmeldenummer: 98118044.1
(22) Anmeldetag: 23.09.1998
(51) Int. Cl.: G11B 5/716, G11B 5/852

(54) **Magnetischer Aufzeichnungsträger mit hoher Aufzeichnungsdichte und Verfahren zu seiner Herstellung**

(30) Priorität: 24.10.1997 DE 19971047068
(71) Anmelder: EMTEC Magnetics GmbH, 67059 Ludwigshafen (DE)
(72) Erfinder: Wiegemann, Hans-Bertram, 69198 Schriesheim (DE); Stehle, Peter, 77731 Willstätt (DE); Traub, Hansjörg, 77743 Neuried (DE); Jakusch, Helmut, 67227 Frankenthal (DE)
(74) Vertreter: Schweiger, Georg, Dr., et al

(57) **Zusammenfassung**

Beschrieben ist ein magnetischer Aufzeichnungsträger, welcher aus mindestens zwei übereinander gegossenen Schichten besteht, wobei die untere Schicht nadelförmige magnetische Pigmente mit einer Feldstärke im Bereich von 5 - 40 kA/m und einer Magnetisierung von 20 - 70 nTm³/g enthält, und wobei die obere Schicht eine hochdichte Metallpulver-Dispersion enthält. Nach dem Beguß der Schichten wird der magnetische Aufzeichnungsträger im nassen Zustand der Schichten einer magnetischen Entorientierungsbehandlung unterzogen, so daß er praktisch keine magnetische und mechanische Anisotropie besitzt. Besonders geeignet ist der so hergestellte magnetische Aufzeichnungsträger für Disketten mit hoher Speicherkapazität von deutlich über 100 MByte.

## Beschreibung

Die Erfindung betrifft einen magnetischen Aufzeichnungsträger, bestehend aus mindestens zwei Schichten, welche auf einem nichtmagnetischen Schichtträger aufgegossen sind und wobei die untere Schicht ein Bindemittel und mindestens ein nadelförmiges Pigment enthält und wobei die obere Schicht ein Bindemittel und ein ferromagnetisches Metallpigment enthält und eine Dicke von höchstens 0,4 µm besitzt. Außerdem betrifft die Erfindung ein Verfahren zur Herstellung derartiger magnetischer Aufzeichnungsträger, welche keine magnetische Vorzugsrichtung besitzen.

Bei modernen magnetischen Aufzeichnungsträgern besteht der andauernde Wunsch nach größeren Speicherkapazitäten, schnelleren Zugriffszeiten und höheren Übertragungsraten der gespeicherten Informationen. Für magnetische Aufzeichnungsträger bedeuten diese Anforderungen zum einen eine stetige Erhöhung der Relativgeschwindigkeit zwischen Medium und Magnetkopf und zum anderen eine stetige Verringerung der Magnetschichtdicke. Beispielsweise besitzen magnetische Aufzeichnungsträger mit hoher Speicherkapazität heute nur noch Magnetschichtdicken von weniger als ca. 1 µm und Relativgeschwindigkeiten zwischen Aufzeichnungsträger und Kopf, die im Bereich von mehreren Metern pro Sekunde liegen.

Besonders bei sogenannten Datendisketten mit Speicherkapazitäten von 100 Mbyte und mehr liegt die Dicke der Aufzeichnungsschicht bereits deutlich unterhalb von 0,5 µm bei Relativgeschwindigkeiten von mehr als 10 m/sec. Bei diesem Typ Magnetmedien ist ein häufiger Anwendungsfall das Verweilen des Magnetkopfes auf ein und derselben Spur, was extreme Anforderungen an die Verschleißfestigkeit der Aufzeichnungsschicht stellt.

Um dieser Forderung zu begegnen, wurden in den letzten Jahren magnetische Aufzeichnungsträger entwikkelt, in denen eine bindemittelfreie ferromagnetische Metallschicht in einer sehr niedrigen Dicke mittels Vakuumtechnik aufgebracht wurde. Diese metal evaporated recording media erreichen zwar einen sehr hohen Wiedergabepegel, jedoch bereitet die Massenproduktion solcher Medien immer noch große Schwierigkeiten im Vergleich zu magnetischen Aufzeichnungsträgern, bei denen die magnetischen Pigmente in Bindemitteln dispergiert sind. Außerdem verändern sich diese ME-Bänder unter dem Einfluß von Luftsauerstoff.

Die Forderung nach geringer Schichtdicke läßt sich jedoch neuerdings auch durch eine dünne magnetische Schicht erfüllen, bei welcher die feinteiligen magnetischen Partikel in einer polymeren Bindemittelmatrix dispergiert sind und bei der diese Schicht auf eine unmagnetische Unterschicht gegossen wird. Solche Aufzeichnungsträger sind beispielsweise in den Veröffentlichungen US 2 819 186, DE-OS 43 02 516, EP 0 520 155, EP 0 566 100, EP 0 566 378, EP 0 682 802 sowie den DE-OS 44 43 896, 195 04 930, 195 11 872, 195 11 873, 195 11 875 und 195 11 876 beschrieben.

Die vorgenannten magnetischen Aufzeichnungsträger beschreiben doppelschichtig aufgebaute Medien, bei welchen die obere magnetische Schicht eine Schichtdicke zwischen 0,01 bis etwas unter 1 µm, vorzugsweise 0,1 - 0,4 µm beträgt. Die Dicke der unteren unmagnetischen Schicht beträgt zwischen 0,5 - 8 µm. In der oberen Schicht befinden sich vorzugsweise feinteilige magnetische Metall- beziehungsweise Metall-Legierungs-Partikel, in der unteren unmagnetischen Schicht befinden sich feinteilige unmagnetische Pigmente, welche in einigen Fällen nadelförmige Struktur besitzen, wie beispielsweise in den vorgenannten Schriften EP 0 566 378 und EP 0 682 802 beschrieben. Aus dem Vergleich der Dicken der Teilschichten ist bereits ersichtlich, daß im wesentlichen die dickere Unterschicht die mechanischen Eigenschaften bestimmt.

Bei herkömmlichen Aufzeichnungsträgern kann durch Einfügen nadelförmiger Pigmente im Gegensatz zu formisotropen Pigmenten die mechanische Stabilität und die Verschleißfestigkeit von magnetischen Aufzeichnungsträgern erhöht werden, insbesondere dann, wenn die Pigmente in geeigneter Weise angeordnet werden. Bei Medien, die, wie zum Beispiel bandförmige magnetische Aufzeichnungsträger, eine Vorzugsrichtung aufweisen, ist eine Anordnung in dieser Richtung empfehlenswert, wie sie in der PCT-Anmeldung 96/30900 der gleichen Anmelderin beschrieben ist. Im Falle nadelförmiger magnetischer Pigmente kann diese Orientierung durch Ausrichten der Pigmente in einem geeigneten Magnetfeld noch wesentlich verbessert werden.

Damit die erforderlich hohe Aufzeichnungsdichte erreicht wird, können nadelförmige Pigmentteilchen zur Verbesserung der mechanischen Eigenschaften nur in der unmagnetischen Unterschicht eingesetzt werden. In diesem Anwendungsfall wird die Ausrichtung der unmagnetischen nadelförmigen Pigmentteilchen durch das Beschichtungsverfahren bereits unterstützt, da sich die Pigmentnadeln aufgrund des Schergefälles, das beim Auftrag zwangsweise entsteht, teilweise in Beschichtungsrichtung orientieren.

Im Falle scheibenförmiger Aufzeichnungsmedien, sogenannter Disketten, ist eine anisotrope Ausrichtung jedoch schädlich, da sich die relative Bewegungsrichtung des Magnetkopfes relativ zur Vorzugsrichtung der Pigmentnadeln während eines Umlaufs dauernd ändert. Hier kommt es im Gegenteil darauf an, möglichst keine anisotropen Eigenschaften des Aufzeichnungsmediums zu erhalten, d. h. weder mechanische noch magnetische.

Somit bestand die Aufgabe, einen magnetischen Aufzeichnungsträger der eingangs genannten gattungsmäßigen Art zu finden, welcher im fertigen Gebrauchszustand weder eine magnetische noch eine mechanische Anisotropie aufweist, und gleichzeitig verbesserte Verschleißfestigkeit und gute mechanische Stabilität besitzt.

Erfindungsgemäß wurde diese Aufgabe gelöst mit einem magnetischen Aufzeichnungsträger, welcher aus mindestens zwei Schichten aufgebaut ist und wobei die untere Schicht mindestens ein nadelförmiges magnetisches Pigment enthält und wobei der magnetische Aufzeichnungsträger nach dem Beguß noch vor der Trocknung durch eine magnetische Behandlung entorientiert wird, so daß die magnetischen Pigmente in der Schicht statistisch verteilt vorliegen.

Im Folgenden wird die Erfindung, nämlich der Aufbau des magnetischen Aufzeichnungsträgers sowie die Verfahren zu seiner Herstellung näher geschildert.

Als unmagnetische flexible Schichtträger sind bekannte Filme aus Polyestern, wie Polyethylenterephthalat oder Polyethylennaphthalat sowie Polyolefinen, Cellulosetriacetat, Polycarbonaten, Polyamiden, Polyimiden, Polyamidoimiden, Polysulfonen, Aramiden oder aromatischen Polyamiden geeignet.

Die untere Schicht enthält erfindungsgemäß nadelförmige magnetische Pigmente, deren magnetische Werte so eingestellt werden, daß sie die Aufzeichnung der oberen magnetischen Schicht nicht stören. Derartige Pigmente und deren Herstellung sind in der PCT-Anmeldung 96/30900 der gleichen Anmelderin für den Fall eines in Längsrichtung beziehungsweise in Gießrichtung ausgerichteten magnetischen Aufzeichnungsträgers näher beschrieben. Dabei handelt es sich vorzugsweise um Pigmente der Formel

Cr^{a}Oₓ • n H₂O

mit
- a:: mittlere Wertigkeit des Chroms mit 3,1 < a ≤ 3,7
- x:: die sich aus der Chrom-Wertigkeit ergebenden Sauerstoffäquivalente
- n:: Wassergehalt mit 0 < n < (4-a)/2
mit einem Verhältnis der durchschnittlichen Länge der Nadeln zum durchschnittlichen mittleren Durchmesser der Nadeln von 3:1 bis 12:1 und einer Länge im Bereich von 50 bis 150 nm. Die spezifische Oberfläche beträgt zwischen 50 und 100 m²/g, die Koerzitivkraft H_{c} beträgt zwischen 5 bis 40 kA/m, vorzugsweise 5 - 25 kA/m. Die Herstellung derartiger Pigmente ist in der genannten PCT-Anmeldung näher beschrieben, so daß an dieser Stelle nicht näher darauf eingegangen werden muß. Damit sich die magnetischen Partikel der Unterschicht - im folgenden als Chromoxid bezeichnet - ausreichend in der magnetischen Entorientierungsstrecke, welche nachfolgend noch näher beschrieben wird, bewegen lassen, müssen sie eine H_{c} von mindestens 5 kA/m und eine spezifische Pulvermagnetisierung im Bereich von 20 bis 70 nTm³ besitzen.

Die weiteren Bestandteile der unteren Schicht wie polymere Bindemittel, weitere Pigmente, Antistatika, Ruße, Gleitmittel, Vernetzer, Lösemittel, Netzmittel, Dispergierhilfsmittel, sind in den vorgenannten Dokumenten näher beschrieben.

Als polymere Bindemittel sind beispielsweise Polyurethane und Vinylpolymere einsetzbar, welche in bevorzugter Ausführung polare Gruppen haben, beispielsweise Sulfonatgruppen. Weiterhin können Gleitmittel wie Fettsäure oder -ester, Vernetzer wie Polyisocyanat, ferner Netzmittel und Lösemittel wie Tetrahydrofuran, Methylethylketon, Cyclohexanon oder Dioxan vorhanden sein. Außerdem kann die untere Schicht außer dem magnetischen Pigment weitere unmagnetische Pigmente, beispielsweise TiO₂, SiO₂, Al₂O₃, BaSO₄, Bornitrid, SnO₂, CaCO₃, ZrO₂, TiC, SiC, Sb₂O₃, ZnO, CeO₂, Ruße sowie weitere Pigmente, jedoch keine nadelförmigen unmagnetischen Teilchen, enthalten.

In der oberen magnetischen Schicht befindet sich in hoher Konzentration ein ferromagnetisches Metallpigment beziehungsweise Metall-Legierungspigment. Beispiele solcher Metallpigmente können ebenfalls den vorgenannten Dokumenten entnommen werden. Die Metallpulverpigmente enthalten als Hauptbestandteil Fe, Ni und Co, ferner bedarfsweise Al, Si S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Mn, Zn, Sr, B. Außerdem können sie an ihrer Oberfläche eine Schutzhülle gegen Oxidation oder gegen sonstige schädliche Einflüsse aufweisen. Die Metallpulver haben eine spezifische BET-Oberfläche im Bereich von 40 - 80 m²/g, die Achsenlänge beträgt höchstens 200 nm, der Achsendurchmesser liegt im Bereich von 10 - 30 nm. Die Koerzitivkraft ist größer als 100 kA/m und das magnetische Moment ist größer als 100 nTm³/g. Ferner enthält die obere magnetische Schicht die üblichen Zusätze wie polymere Bindemittel, die auch polare Gruppen enthalten können oder entsprechende Bindemittelmischungen sowie Dispergierhilfsmittel, unmagnetische Pigmente, Gleitmittel, Härtungsmittel, leitfähigkeitserhöhende Mittel, Netzmittel und Lösemittel, die sämtlich aus dem Stand der Technik bekannt sind.

Das Verfahren zur Herstellung der magnetischen Dispersion umfaßt mindestens eine Verknetungsstufe, eine Dispergierstufe und gegebenenfalls eine Mischstufe, die vor und nach den vorhergehenden Stufen vorgesehen sein kann. Die jeweiligen Stufen können jeweils aus zwei oder mehr Stufen zusammengesetzt sein. Bei der Herstellung der Zusammensetzung können alle Ausgangsmaterialien, nämlich das ferromagnetische Pulver, die Bindemittel, die Ruße, die Schleifmittel oder Stützpigmente, die Antistatikmittel, die Schmiermittel, die Netzmittel, die Dispergierhilfsmittel und die Lösungsmittel, gleich zu Beginn des Verfahrens oder später während des Ablaufs des Verfahrens dem Reaktor-Aggregat zugesetzt werden. Die einzelnen Ausgangsmaterialien können in mehrere Portionen unterteilt werden, die in zwei oder mehr Stufen dem Verfahren zugesetzt werden. So wird beispielsweise das Polyurethan in mehrere Portionen unterteilt und in der Verknetungsstufe und in der Dispergierstufe und auch in der Mischstufe zur Einstellung der Viskosität nach dem Dispergieren zugegeben. Der Vernetzer sowie gegebenenfalls ein Vernetzungskatalysator wird vorzugsweise nach Abschluß der Dispersionsherstellung zugegeben.

Um das Ziel der vorliegenden Erfindung zu erreichen, kann auch eine bekannte herkömmliche Technologie als Teil des Verfahrens zur Herstellung des erfindungsgemäßen Magnetaufzeichnungsmediums verwendet werden. So kann zum Beispiel in der Verknetungsstufe eine Vorrichtung mit einer hohen Knetkraft verwendet werden, um einen magnetischen Aufzeichnungsträger mit einem hohen Bᵣ-Wert zu erhalten.

Nach Feinfiltration durch engmaschige Filter mit einer Weite von höchstens 5 µm werden die Dispersionen mittels einer konventionellen Beschichtungsvorrichtung mit Geschwindigkeiten im Bereich von 50 - 500 m/min aufgetragen, in einer Magnetfeldstrecke entorientiert und anschließend getrocknet sowie einer Kalanderbehandlung und gegebenenfalls einer weiteren Oberflächenbehandlung unterzogen.

Die Messung der Qualität der Dispersionen für die obere und die untere Schicht wird vorzugsweise so durchgeführt wie in dem Artikel "Shear magnetometry for the analysis of magnetic tape dispersion" in IEEE Trans. Magn. 32, 1996, S. 4048 - 4053, beschrieben.

Die Beschichtung kann erfolgen mittels Rakelgießer, Messergießer, Abstreifgießer, Extrudergießer, Reverse-Roll-Coater oder Kombinationen. Beide Schichten können simultan im Naß/Naß-Verfahren oder im Naß/Trocken-Verfahren aufgetragen werden.

Besonders bevorzugt zur Herstellung der erfindungsgemäßen magnetischen Aufzeichnungsträger ist ein Messergießer mit mindestens einer, vorzugsweise zwei oder mehr Austrittsöffnungen, welcher aus der DE-OS 195 04 930 der gleichen Anmelderin bekannt ist. Ebenfalls geeignet ist ein Extrudergießer mit mindestens einer, vorzugsweise zwei oder mehr Austrittsöffnungen für die magnetischen Dispersionen, wobei den Öffnungen gegenüberliegend auf der anderen Seite des flexiblen Schichtträgers die Kante oder der Luftspalt eines Magneten gegenübersteht und wobei dessen Feldlinien im wesentlichen parallel zur Laufrichtung des Schichtträgers verlaufen. Solche Anordnungen sind aus der EP-B-0 654 165 oder der FR 2 734 500 bekannt.

Entorientierende Magnetfeldstrecken sind beispielsweise aus der EP-B-121 093 und der PCT-Anmeldung 96/35210 der gleichen Anmelderin sowie aus der US 5 455 093 bekannt. Eine besonders bevorzugte Entorientierungsstrecke ist in der genannten PCT-Anmeldung beschrieben. Sie besteht aus mehreren, nacheinander angeordneten Behandlungszonen, und zwar:
a) eine Richtzone, welche ein unipolares, zeitlich konstantes Magnetfeld enthält, dessen Richtung senkrecht zur Ebene des Schichtträgers orientiert ist
b) eine Übergangszone im Anschluß an die Richtzone a), in welcher das Magnetfeld der Richtzone a) fortgesetzt wird und in der Bewegungsrichtung bis auf höchstens 10 % der Feldstärke in der Richtzone a) abnimmt, und
c) eine feldfreie Entrichtzone im Anschluß an die Übergangszone b), deren Länge so bemessen ist, daß sich die magnetisch anisotropen Pigmente in der flüssigen Dispersionsschicht spontan entorientieren.

Die Magnetanordnung zur Entorientierung des magnetischen Aufzeichnungsträgers besteht aus Magneten, die spiegelsymmetrisch beiderseits einer Symmetrieebene angeordnet sind, die mit der Ebene der Dispersionsschicht übereinstimmt, wobei sich jeweils ungleichnamige Magnetpole gegenüberstehen mit gleichnamigen benachbarten Magnetpolen in jeder Raumhälfte beiderseits der Symmetrieebene, so daß die Magnetisierungsvektoren gleichgerichtet sind, und wobei der Abstand der Polflächen von der Symmetrieebene im Einlaufteil der Anordnung konstant ist und im Auslaufteil sich gleichmäßig vergrößert.

Nach der anschließenden Trocknung und Kalandrierung wird der so erhaltene magnetische Aufzeichnungsträger in die gewünschte kreisförmige Gebrauchsform gestanzt und den üblichen elektromagnetischen sowie den mechanischen Prüfungen unterzogen. Besonders günstige Ergebnisse werden dann erhalten, wenn eine sehr dünne magnetische Oberschicht, deren Schichtdicke weniger als 0,4 µm beträgt, auf eine magnetische Unterschicht, deren Schichtdicke bevorzugt 0,8 - 2 µm beträgt, gegossen werden soll.

Die Erfindung wird nun an praktischen Beispielen und Vergleichsbeispielen näher erläutert, ohne jedoch die Erfindung auf die speziellen Rezeptbeispiele und die Vorrichtung zur Herstellung eines solchen magnetischen Aufzeichnungsträgers zu beschränken.

Eine bevorzugte Ausführung der Herstellung des erfindungsgemäßen Aufzeichnungsträgers geht aus der Figur hervor.

Der in Pfeilrichtung laufende flexible Schichtträger (2) durchläuft die Messergießer-Beschichtungseinrichtung (1), bestehend aus unterem Block (6), oberem Block (4) und dem Mittelteil (7) sowie den dazwischenliegenden Gießerschlitzen, in denen die erste beziehungsweise zweite Dispersion als Beschichtung (8, 9) auf den Schichtträger (2) aufgebracht werden. Gegenüberliegend den Austrittsschlitzen befindet sich der Scheitelpunkt S einer drehbaren Gießwalze (3), über welche der Schichtträger (2) läuft..

Nach Durchlaufen der Beschichtungseinrichtung läuft der beschichtete Schichtträger (2, 8, 9) im nassen Zustand der Dispersionen in die bereits beschriebene Entrichtstrecke (11) ein, bestehend aus der Strecke a) mit konstantem Feldverlauf, der Strecke b) mit monoton abnehmendem Feld sowie der feldfreien Entorientierungsstrecke c). Die Magnetanordnung (12, 13) ist aus der Figur ebenfalls ersichtlich.

### Beispiel 1

Mittels einer Begußvorrichtung, wie sie in der DE-OS 195 04 930 näher beschrieben ist, wurde ein magnetischer Aufzeichnungsträger hergestellt, bestehend aus einer dünnen magnetischen Oberschicht, welche auf eine magnetische Unterschicht gegossen wurde. Den beiden Schichten liegen folgende Rezepte zugrunde:

| a) Zusammensetzung der unteren Schicht | Gewichtsteile |
|---|---|
| Vinylpolymer mit polaren Gruppen | 8 |
| Polyurethan mit polaren Gruppen | 4 |
| Chromoxid (73 m²/g BET, H_{c}: 15 kA/m) | 63 |
| Al₂O₃ (Primär-Teilchengröße 0,4 µm) | 12 |
| Ruß (Primär-Teilchengröße 30 nm) | 25 |
| Gleitmittel | 10,6 |
| Dispergierhilfsmittel | 2 |
| Vernetzer | 4 |
| Lösemittel (Tetrahydrofuran, Dioxan) | 416 |

| b) Zusammensetzung der oberen Schicht | Gewichtsteile |
|---|---|
| magnetisches Metallpigment (H_{c} 132 kA/m, BET 60 m²/g) | 100 |
| α-Al₂O₃ (Primär-Teilchengröße = 0,4 µm) | 10 |
| Vinylpolymer mit polaren Gruppen | 10 |
| Polyurethan mit polaren Gruppen | 10 |
| Ruß (Primär-Teilchengröße = 25 nm) | 5 |
| Dispergierhilfsmittel | 1,1 |
| Gleitmittel | 15 |
| Vemetzer | 5 |
| Lösemittel (Tetrahydrofuran, Dioxan) | 600 |

Die Beschichtung erfolgte im Naß/Naß-Verfahren; beschichtet wurde auf eine balanced PET-Folie mit einer Trägerdicke von 62 µm. Die Trockendicke der Unterschicht betrug 1,3 µm, die der Oberschicht 0,3 µm. Nach der Beschichtung der beiden Teilschichten wurde im nassen Zustand der Schichten die Entorientierung des magnetischen Aufzeichnungsträgers in einer Strecke wie in der PCT-Anmeldung 96/35210, Beispiel 1, beschrieben, durchgeführt. Die Beschichtung wurde dabei beidseitig in zwei Durchläufen durch die beschriebene Beschichtungsmaschine mit einer Beschichtungsgeschwindigkeit von 70 m/min durchgeführt. Nach der Trocknung wurde der magnetische Aufzeichnungsträger in üblicher Weise kalandriert. Aus der fertigen aufgewickelten Beschichtungsbahn wurden scheibenförmige magnetische Aufzeichnungsträger ausgestanzt und auf übliche Weise fertig konfektioniert.

Die resultierende Magnetschicht war isotrop, das heißt ohne magnetische Vorzugsrichtung. Der gemessene Modulationshub der Sinus-Doppelwelle von U_{L} betrug 0 - 1,2 % mit einem üblichen Schwingmagnetometer wurden Richtfaktoren 0,98 - 1,02 an Bahnproben gemessen. Die Rauhigkeit Rₐ betrug 3 - 4 nm, interferometrisch gemessen mit einem Gerät des Typs Topo 3 D der Firma Wyko.

### Vergleichsbeispiel 1

Es wurde verfahren wie in Beispiel 1, jedoch ohne magnetische Entorientierung der aufgegossenen Schichten.

Die resultierende Magnetschicht war nicht isotrop mit einer magnetisch leichten Achse in X-Richtung. Der orientierungsabhängige Modulationshub von U_{L} betrug 0 - 3 %, im Mittel 1 %. Es wurden Richtfaktor-Werte von 0,95 - 1,06 gemessen. Die Rauhigkeit war gegen Beispiel 1 verschlechtert.

### Beispiel 2

Die Zusammensetzung der unteren und der oberen Schicht war wie in Beispiel 1, jedoch wurde die Beschichtung im Naß/Trocken-Verfahren durchgeführt, in dem zunächst die untere Schicht wie in Beispiel 1 auf den Schichtträger gegossen wurde, an

### Beispiel 3

| a) Zusammensetzung der unteren Schicht | Gewichtsteile |
|---|---|
| Vinylpolymer mit polaren Gruppen | 9 |
| Polyurethan mit polaren Gruppen | 9 |
| Chromoxid (BET 70 m²/g, 1-110 nm, H_{c} 23 kA/m) | 28 |
| Al₂O₃ (Primär-Teilchengröße 0,4 µm) | 20 |
| Ruß (Primär-Teilchengröße 24 nm) | 25 |
| TiO₂ (Primär-Teilchengröße 30 nm) | 27 |
| Dispergierharz mit polaren Gruppen | 7 |
| Dispergierhilfsmittel | 2 |
| Gleitmittel | 11,6 |
| Vemetzer | 5 |
| Lösemittel (Tetrahydrofuran, Dioxan) | 416 |

Die Zusammensetzung der oberen Schicht war wie in Beispiel 1.

Es wurde verfahren wie in Beispiel 1 geschildert, die Prüfung der magnetischen und der mechanischen Werte des so hergestellten scheibenförmigen magnetischen Aufzeichnungsträgers gab ähnlich gute Werte wie in Beispiel 1.

### Beispiel 4

Es wurde verfahren wie im Beispiel 3, jedoch geschah die magnetische Entorientierungsbehandlung mittels einer Vorrichtung, wie sie in der US 5 455 093 im Beispiel 1 beschrieben ist, nämlich mittels eines ersten magnetischen Wechselfeldes mit einer Stärke von 200 Gauß und einer Frequenz von 50 Hertz und eines zweiten Feldes mit einer Stärke von 120 Gauß und einer Frequenz von 50 Hertz, um die Entorientierung durchzuführen.

Es wurden ähnliche Werte wie in Beispiel 3 erzielt.

### Beispiel 5

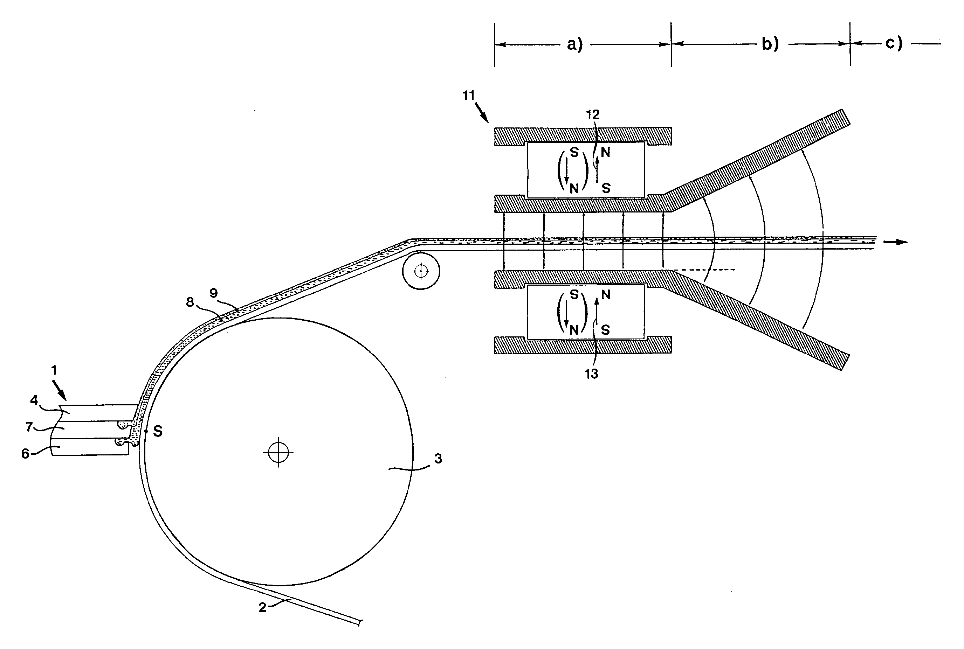

Es wurde verfahren wie in Beispiel 3, jedoch bestand die magnetische Entorientierungsstrecke aus einer Anordnung, wie sie in der bereits erwähnten EP-B-0 121 093 beschrieben ist, und zwar durchläuft die flüssige magnetische Doppelschicht zunächst eine Anordnung gemäß Figur 9 zur Senkrechtstellung der magnetisierbaren Teilchen, welcher anschließend eine Anordnung gemäß Figur 5 zur Entorientierung der magnetisierbaren Teilchen in noch flüssigem Zustand der Dispersion folgt.

Dabei wurden ähnliche Werte wie in Beispiel 3 erhalten.

### Vergleichsbeispiel 2

Es wurde verfahren wie in Beispiel 1, jedoch wurden die 63 Gewichtsteile des magnetischen Chromoxids durch gleiche Teile eines unmagnetischen Chromoxids mit gleicher Teilchengröße ersetzt, dessen H_{c} < 0,5 kA/m² betrug.

Als Resultat wurde ein magnetischer Aufzeichnungsträger erhalten, bei welchem die Rauhigkeit der Schichtoberfläche verschlechtert war.

### Beispiel 6

Die Zusammensetzung der unteren Schicht war wie in Beispiel 3, jedoch hatte die obere Schicht folgende Zusammensetzung:

| Obere Schicht | Gewichtsteile |
|---|---|
| magnetisches Pigment (H_{c} 145 kA/m, BET 60 m²/g) | 100 |
| α-Al₂O₃ (Primär-Teilchengröße = 0,4 µm) | 10 |
| Vinylpolymer mit polaren Gruppen | 7 |
| Polyester-Polyurethan mit polaren Gruppen | 3 |
| Ruß (Primär-Teilchengröße 30 nm) | 5 |
| Dispergierhilfsmittel | 1,2 |
| Gleitmittel | 15 |
| Vernetzer | 5 |
| Lösemittel | 600 |

Es wurde verfahren wie in Beispiel 1, jedoch betrug die Schichtdicke der oberen Schicht 0,15 µm.

Der so hergestellte kreisförmige magnetische Aufzeichnungsträger besaß gute mechanische und magnetische Eigenschaften. Es konnten Disketten für Anwendungen mit deutlich mehr als 100 Mbyte Speicherkapazität hergestellt werden.

## Patentansprüche

1. Magnetischer Aufzeichnungsträger, bestehend aus einem unmagnetischen Schichtträger, auf welchem mindestens eine untere Schicht aufgebracht ist, welche mindestens ein nadelförmiges Pigment enthält, welches in einem Bindemittel dispergiert ist und eine obere Schicht, welche ein ferromagnetisches Metallpulver enthält, welches in einem Bindemittel dispergiert ist und wobei die Schichtdicke der oberen Schicht höchstens 0,4 µm beträgt, **dadurch gekennzeichnet, daß** die untere Schicht ein nadelförmiges magnetisches Pigment enthält, dessen Koerzitivfeldstärke nicht über 40 kA/m beträgt, und daß der magnetische Aufzeichnungsträger unmittelbar nach dem Auftrag der Schichten in deren nassem Zustand einer magnetischen Entorientierungsbehandlung unterzogen wird.

2. Magnetischer Aufzeichnungsträger nach Anspruch 1, **dadurch gekennzeichnet, daß** das nadelförmige magnetische Pigment der unteren Schicht ein Chromoxid der Formel
Cr^{a}O_{X} • nH₂O
mit
a: mittlere Wertigkeit des Chroms mit 3,1 < a ≤ 3,7
x: die sich aus der Chrom-Wertigkeit ergebenden Sauerstoffäquivalente
n: Wassergehalt mit 0 < n < (4-a)/2
mit einem Verhältnis der durchschnittlichen Länge zum mittleren durchschnittlichen Durchmesser von mindestens 3 und mit einer Koerzitivkraft H_{c} im Bereich von 5 - 40 kA/m ist.

3. Aufzeichnungsträger gemäß Anspruch 1 - 2, **dadurch gekennzeichnet, daß** das magnetische Pigment in der unteren Schicht eine Magnetisierung von höchstens 70 nTm³/g aufweist.

4. Aufzeichnungsträger nach Anspruch 1, **dadurch gekennzeichnet, daß** das magnetische Metallpulver in der oberen Schicht eine Nadellänge von weniger als 200 nm und eine H_{c} von größer als 100 kA/m besitzt.

5. Magnetischer Aufzeichnungsträger nach Anspruch 1, **dadurch gekennzeichnet, daß** die Schichtdicke der unteren Schicht im Bereich von 0,5 - 8 µm liegt.

6. Magnetischer Aufzeichnungsträger gemäß den Ansprüchen 1 - 5, **dadurch gekennzeichnet, daß** außer dem nadelförmigen magnetischen Pigment in der unteren Schicht noch mindestens ein weiteres nicht nadelförmiges unmagnetisches Pigment vorhanden ist.

7. Magnetischer Aufzeichnungsträger nach Anspruch 6, **dadurch gekennzeichnet, daß** das weitere Pigment in der unteren Schicht ein Ruß mit einem Primärteilchendurchmesser von kleiner als 100 nm, vorzugsweise kleiner als 40 nm ist.

8. Magnetischer Aufzeichnungsträger nach Anspruch 6, **dadurch gekennzeichnet, daß** das weitere unmagnetische Pigment ausgewählt ist aus feinteiligen Al₂O₃, TiO₂, SiO₂, BaSO₄, Bornitrid, SnO₂, CaCO₃, ZrO₂, TiC, SiC, Sb₂O₃, ZnO, CeO₂, und anderen nicht nadelförmigen Teilchen.

9. Verfahren zur Herstellung eines magnetischen Aufzeichnungsträgers gemäß den Ansprüchen 1 bis 8, **dadurch gekennzeichnet, daß** die beiden magnetischen Schichten nach ihrem Auftrag im nassen Zustand der Dispersionen eine Entorientierungs-Vorrichtung durchlaufen, bestehend aus einer Richtzone, welche ein unipolares zeitlich konstantes Magnetfeld enthält, dessen Richtung senkrecht zur Ebene des Schichtträgers orientiert ist, einer anschließenden Übergangszone, in welcher das Magnetfeld der ersten Richtzone fortgesetzt wird und in der Bewegungsrichtung des beschichteten Schichtträgers bis auf höchstens 10 % der Feldstärke in der ersten Richtzone abnimmt und einer anschließenden feldfreien Entrichtzone im Anschluß an die Übergangszone, deren Länge so bemessen ist, daß sich die magnetisch anisotropen Pigmente in den flüssigen Dispersionen spontan entorientieren.

10. Verfahren zur Herstellung eines magnetischen Aufzeichnungsträgers gemäß den Ansprüchen 1 - 8, **dadurch gekennzeichnet, daß** die Entorientierungseinrichtung aus zwei magnetischen Wechselfeldeinrichtungen besteht, wobei die erste Feldeinrichtung eine höhere Feldstärke hat als die zweite.

11. Verfahren zur Herstellung eines magnetischen Aufzeichnungsträgers gemäß den Ansprüchen 1 - 8, **dadurch gekennzeichnet, daß** die Entorientietungseinrichtung aus einer ersten Magneteinrichtung besteht, bei der die anisotropen Teilchen in die Senkrechtstellung gebracht werden, welcher eine zweite Anordnung folgt, bestehend aus beiderseits des Schichtträgers angeordneten Magnetplättchen, deren äußeres Magnetfeld im wesentlichen senkrecht zum Schichtträger wirkt, wobei die Feldorientierung in Beschichtungsrichtung unter gleichzeitiger Abnahme der Feldstärke laufend um 180° wechselt.
